# EUROPEAN PATENT SPECIFICATION

(11) **EP 1 016 177 B1**
(45) Date of publication and mention of the grant of the patent: **24.07.2002**
(21) Application number: 98907022.2
(22) Date of filing: 24.02.1998
(51) Int. Cl.: H02G 3/04

(54) **FLEXIBLE PROTECTIVE SLEEVES**
BIEGSAME SCHUTZHÜLLE
GAINES SOUPLES DE PROTECTION

(30) Priority: 05.03.1997 GB 9704530
(43) Date of publication of application: 05.07.2000
(73) Proprietor: Federal-Mogul Technology Limited, Rugby, Warwickshire CV22 7SA (GB)
(72) Inventor: PINDAR, Carol, Jayne, Daventry, Northamptonshire NN11 5SQ (GB); HESS, Joseph, Paul, West Chester, PA 19380 (US)
(74) Representative: Drury, Peter Lawrence
(86) International application number: GB9800558
(87) International publication number: WO9839828

(56) References cited:
- EP-A- 0 220 533
- EP-A- 0 346 762
- EP-A- 0 556 140
- DE-A- 3 212 386
- PATENT ABSTRACTS OF JAPAN vol. 014, no. 184 (C-0709), 13 April 1990 & JP 02 031701 A (ACHILLES CORP), 1 February 1990,

## Description

This invention is concerned with flexible protective sleeves which are suitable for use for protecting wires or pipes, eg in the engine compartment of a vehicle.

Flexible protective sleeves are widely used to protect wires and pipes from damage. Such sleeves normally have a wall made from plastics material, such as nylon, polypropylene or polyester. In some sleeves, said wall is made from plastics yarns or filaments, eg by braiding or weaving. Other sleeves have walls formed from sheet plastics material in tubular form. Some sleeves have a longitudinal slit in their wall to enable the sleeve to be installed over a pipe, a wire, or a bundle of wires which is already in situ. This invention is applicable to all these forms of sleeve.

The invention is, in particular, applicable to protective sleeves of the convoluted type. This type has a wall from sheet plastics material in the form of a convoluted tube, ie the wall has annular crests separated by annular troughs. The convolutions make the tube more conformable to bends in the wire or pipe. The convolutions in such a sleeve can take various forms, eg a cross-section taken through the wall longitudinally of the tube may have the appearance of a sine wave or a square wave. Bends in the sleeve are accommodated by opening of the convolutions on the outer side of the bend and closing of the convolutions on the inner side of the bend.

A conventional flexible protective sleeve consists only of the afore-mentioned wall, ie the sleeve is entirely made of heat-resistant plastics material in braided, woven or tubular sheet form. Such sleeves are used, eg in engine compartments, to protect, for example, wires leading to spark plugs, the distributor etc., or fuel pipes.

In many cases, conventional flexible protective sleeves give rise to undesirable noise. Such noise may be caused by the sleeve contacting, eg vibrating against, adjacent components. Where the sleeve has a longitudinal slit, noise can also be caused by the edges of the slit contacting one another.

The problem of reducing noise from such sleeves has been considered in EP 0 556 140 B where the proposed solution is to wrap the sleeve with a strip of sound-insulating material, eg felt, which is adhered to the wall of the sleeve and folded over itself. Where the sleeve has a longitudinal slit, the strip's longitudinal edges are passed through the slit and reduce noise created within the sleeve by contact between the internal surface of the wall and the wire or pipe being protected. The process of applying the strip of material is, however, complex and the strip significantly increases the weight of the sleeve. Furthermore, it may be difficult to conform the strip to the outer surface of the wall of the sleeve, eg in the case of a convoluted sleeve of a square wave form.

It is an object of the present invention to provide an improved flexible protective sleeve having noise reducing capability but avoiding the use of an adhered strip.

The invention provides a flexible protective sleeve comprising a wall made of plastics material, characterised in that the sleeve also comprises a flock layer adhered directly to the wall, the flock layer extending over at least part of the external surface of the wall.

In a sleeve according to the invention, the flock layer, ie a layer formed from fine particles of fibre, can be readily applied, eg by applying adhesive to the wall of the sleeve, electrostatically charging the particles, and exposing the sleeve to the particles while an electrical potential exists between the sleeve and the particles, techniques for flocking being well-known. By controlling to what parts of the sleeve the adhesive is applied, the flock layer can be applied to any desired part of the external surface or to the entire external surface. The flock layer is light and, since it can be applied electrostatically, can conform itself to the surface.

If desired, part only of the external surface of the wall may have the flock layer applied thereto. This not only reduces the number of fibres used but can also improve noise reduction, since it is found that a complete covering of flock sometimes results in less noise reduction than an incomplete covering. For example, where the sleeve is convoluted, since the parts of the external surface of the greatest diameter are more likely to contact other components, the flock layer may extend only over these parts. Another possibility is that the flock layer may be applied only to discrete areas distributed over the external surface of the wall, eg the areas may be stripes, or a regular or random pattern of dots.

Where the wall has a longitudinal slit therein, the flock layer may also extend over at least one of the edges of the slit. This enables the flock layer to reduce noise caused by contact between the edges of the slit.

Where the wall has a longitudinal slit therein, the flock layer may also extend over at least part of the internal surface of the wall. This can be achieved by opening the slit to apply the flock layer.

The flock layer may be formed from any suitable fibres which can withstand the environment in which the sleeve is to be used. Nylon fibres, eg nylon 6 or 66, and polyester fibres are suitable for many applications. The fibres may be 0.5mm to 3mm in length, eg 0.7mm. The fibres may be substantially all of the same length or may be of different lengths within the range stated. Suitable fibre thicknesses are 1.7 to 22 dtex (the fibre thickness unit dtex has dimensions of g/10,000m).

The adhesive used for adhering the flock layer may be applied from rollers, printed on, or sprayed on, eg with the use of a mask. Preferably, the adhesive is water-based, polyvinyl alcohols, acrylic and polyurethane latexes being suitable in some cases. However, solvent-based alternatives include epoxies and polyurethanes.

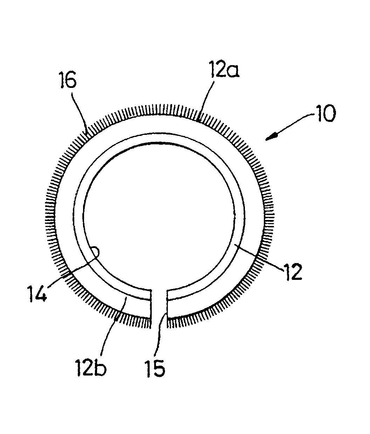

There now follows a detailed description, to be read with reference to the accompanying drawing, of a flexible protective sleeve which is illustrative of the invention.

The drawing is an end view of the illustrative sleeve.

The illustrative sleeve 10 comprises a wall 12 made of sheet plastics material, specifically nylon 6. The wall 12 is in convoluted tubular sheet form. The wall 12 has a thickness of 0.3 to 0.5mm. The convolutions of the wall 12 are approximately in the form of a sine wave. The wall 12 encloses a space 14 which has a circular transverse cross-section at all points along the sleeve 10 but varies in radius. The radius of the external surface of the wall 12 is greatest at convex crests 12a thereof and smallest at concave troughs 12b. The sleeve 10 is intended to protect a wire, a bundle of wires, or a pipe (not shown) which passes through the space 14. A longitudinal slit 15 through the wall 12 extends along the length of the sleeve 10.

The sleeve 10 also comprises a flock layer 16 adhered directly to the wall 12. The flock layer 16 comprises nylon fibres which are approximately 0.7mm in length and 1.7 dtex. The flock layer 16 extends over parts of the external surface of the wall 12. Specifically, the layer 16 extends over convex portions of the external surface of the wall 12 in bands which extend circumferentially around the sleeve 10 (except where interrupted by the slit 15).

The flock layer 16 is applied by applying adhesive to the parts of the wall 12 where the layer 16 is required, by spraying, and then passing the wall 12 through a dc electrostatic flocking plant. In the plant, electrostatically charged fibres spread themselves over the wall 12 but only adhere where there is adhesive.

The illustrative sleeve 10 was subjected to standard noise tests in comparison with a comparison sleeve having an identical wall 12 but omitting the flock layer 16. In an external rattling test in which the test specimen is vibrated against a steel plate, a bundle of wires gave a noise level of 90.6 decibels. When the comparison sleeve was installed over the bundle, the noise level was 63.5 decibels. When the comparison sleeve was replaced by the sleeve 10 the noise level was 46.2 decibels. In a rubbing test in which the test specimen is rubbed along a steel plate, the wire bundle gave a noise level of 52.4 decibels; with the comparison sleeve on the bundle, the level was 52.3 decibels; and with the sleeve 10 on the bundle, the level was 45.7 decibels.

## Claims

1. A flexible protective sleeve (10) comprising a wall (12) made of plastics material, **characterised in that** the sleeve also comprises a flock layer (16) adhered directly to the wall, the flock layer extending over at least part of the external surface of the wall.

2. A sleeve according to claim 1, **characterised in that** part (12a) only of the external surface of the wall (12) has the flock layer (16) applied thereto.

3. A sleeve according to claim 2, **characterised in that** the wall (12) is convoluted and the flock layer (16) extends only over parts (12a) of the external surface of the wall of greatest diameter.

4. A sleeve according to claim 2, **characterised in that** the flock layer (16) is applied to discrete areas distributed over the external surface of the wall (12).

5. A sleeve according to any one of claims 1 to 4, **characterised in that** the wall (12) has a longitudinal slit (15) therein and the flock layer (16) also extends over at least one of the edges of the slit.

6. A sleeve according to any one of claims 1 to 5, **characterised in that** the wall (12) has a longitudinal slit (15) therein and the flock layer (16) also extends over at least part of the internal surface of the wall.

7. A sleeve according to any one of claims 1 to 6, **characterised in that** the flock layer (16) is formed from nylon fibres.

8. A sleeve according any one of claims 1 to 7, **characterised in that** the fibres forming the flock layer (16) are 0.5mm to 3mm in length.

9. A sleeve according to any one of claims 1 to 8, **characterised in that** the fibres forming the flock layer (16) have thicknesses between 1.7 and 22 dtex.

## Patentansprüche

1. Flexibler bzw. biegsamer Schutzschlauch bzw. flexible bzw. biegsame Schutzhülle (10) mit einer Wand (12) aus Kunststoffmaterial, **dadurch gekennzeichnet, daß** die Hülle ferner eine Flockfaserschicht bzw. Flockschicht (16) aufweist, die unmittelbar an die Wand angeheftet bzw. angeklebt ist bzw. an dieser adhäriert, wobei die Flockschicht sich über mindestens einen Teil der Außenfläche der Wand erstreckt.

2. Hülle nach Anspruch 1, **dadurch gekennzeichnet, daß** nur ein Teil (12a) der Außenfläche der Wand (12) die hierauf aufgebrachte Flockschicht (16) aufweist.

3. Hülle nach Anspruch 2, **dadurch gekennzeichnet, daß** die Wand (12) gewellt ist und die Flockschicht (16) sich nur über Teile (12a) der Außenfläche der Wand erstreckt, die den größten Durchmesser aufweisen.

4. Hülle nach Anspruch 2, **dadurch gekennzeichnet, daß** die Flockschicht (16) auf diskrete bzw. getrennte bzw. diskontinuierliche Bereiche aufgebracht ist, die über die Außenfläche der Wand (12) verteilt sind.

5. Hülle nach einem der Ansprüche 1 bis 4, **dadurch gekennzeichnet, daß** die Wand (12) einen Längsschlitz (15) in ihr aufweist und die Flockschicht (16) sich ebenfalls über mindestens einen der Ränder bzw. Kanten des Schlitzes erstreckt.

6. Hülle nach einem der Ansprüche 1 bis 5, **dadurch gekennzeichnet, daß** die Wand (12) einen Längsschlitz (15) in ihr aufweist und die Flockschicht (16) sich ebenfalls über mindestens einen Teil der Innenfläche der Wand erstreckt.

7. Hülle nach einem der Ansprüche 1 bis 6, **dadurch gekennzeichnet, daß** die Flockschicht (16) aus Nylonfasem gebildet ist.

8. Hülle nach einem der Ansprüche 1 bis 7, **dadurch gekennzeichnet, daß** die die Flockschicht (16) bildenden Fasern eine Länge im Bereich von 0,5 mm bis 3 mm aufweisen.

9. Hülle nach einem der Ansprüche 1 bis 8, **dadurch gekennzeichnet, daß** die die Flockschicht (16) bildenden Fasern Dicken bzw. Stärken im Bereich zwischen 1,7 und 22 dtex aufweisen.

## Revendications

1. Gaine souple de protection (10) comprenant une paroi (12) faite de matière plastique, **caractérisée en ce que** la gaine comprend également une couche floquée (16) collée directement à la paroi, la couche floquée s'étendant sur au moins une partie de la surface externe de la paroi.

2. Gaine selon la revendication 1, **caractérisée en ce que** seule une partie (12a) de la surface externe de la paroi (12) reçoit une application de couche floquée (16).

3. Gaine selon la revendication 2, **caractérisée en ce que** la paroi (12) comporte des circonvolutions et la couche floquée (16) s'étend uniquement sur des parties (12a) de la surface externe de la paroi de plus grand diamètre.

4. Gaine selon la revendication 2, **caractérisée en ce que** la couche floquée (16) est appliquée sur des zones discontinues réparties sur la surface externe de la paroi (12).

5. Gaine selon l'une quelconque des revendications 1 à 4, **caractérisée en ce que** la paroi (12) comporte une fente longitudinale (15) en son sein et la couche floquée (16) s'étend également sur au moins l'un des bords de la fente.

6. Gaine selon l'une quelconque des revendications 1 à 5, **caractérisée en ce que** la paroi (12) comporte une fente longitudinale (15) en son sein et la couche floquée (16) s'étend également sur au moins une partie de la surface interne de la paroi.

7. Gaine selon l'une quelconque des revendications 1 à 6, **caractérisée en ce que** la couche floquée (16) est formée à partir de fibres de Nylon.

8. Gaine selon l'une quelconque des revendications 1 à 7, **caractérisée en ce que** les fibres formant la couche floquée (16) ont une longueur comprise entre 0,5 mm et 3 mm.

9. Gaine selon l'une quelconque des revendications 1 à 8, **caractérisée en ce que** les fibres formant la couche floquée (16) ont une épaisseur comprise entre 1,7 et 22 dtex.
